(19) Europäisches Patentamt
European Patent Office
Office européen des brevets

(11) Publication number: **0 065 811**
**B1**

(12) # EUROPEAN PATENT SPECIFICATION

(45) Date of publication of patent specification: **02.01.86**

(51) Int. Cl.$^4$: **C 09 B 29/52**, C 09 B 31/14 // D06P3/54

(21) Application number: **82300932.9**

(22) Date of filing: **23.02.82**

(54) **Disperse azopyrimidine dyestuffs.**

(30) Priority: **07.05.81 GB 8114005**

(43) Date of publication of application:
**01.12.82 Bulletin 82/48**

(45) Publication of the grant of the patent:
**02.01.86 Bulletin 86/01**

(84) Designated Contracting States:
**BE CH DE FR GB IT LI**

(56) References cited:
**DE-A-2 715 984**
**FR-E- 94 286**
**GB-A-1 188 610**

(73) Proprietor: **IMPERIAL CHEMICAL INDUSTRIES PLC**
**Imperial Chemical House Millbank**
**London SW1P 3JF (GB)**

(72) Inventor: **Harvey, Edwin Dennis**
**10 Dene Court**
**HeatonNorris Stockport Cheshire (GB)**
Inventor: **Leng, John Lindley**
**49 Meadway**
**Bramhall Stockport Cheshire (GB)**
Inventor: **Parton, Brian**
**11 Cleadon Drive South**
**Bury Lancashire BL8 1EJ (GB)**

(74) Representative: **Stephenson, Kenneth et al**
**Imperial Chemical Industries PLC Legal**
**Department: Patents PO Box 6**
**Welwyn Garden City Herts, AL7 1HD (GB)**

**The file contains technical information submitted after the application was filed and not included in this specification**

EP 0 065 811 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to disperse azopyrimidine dyestuffs.

It is already known to make disperse dyes by coupling a carbocyclic or heterocyclic diazo component with an aminopyrimidine coupling component, both components being free of water-solubilising ionic groups. Thus, each of GB—A—1188610 and FR—A—94286 describes disperse dyes containing the residue of an aminopyrimidine coupling component which may carry a hydrocarbyloxy or hydrocarbylthio substituent in addition to amino substituents. Dyes containing a hydrocarbylthio substituent in the 6-position of the pyrimidine ring are specifically disclosed. DE—A—2715984 relates to a similar class of dyes and specifically describes the coupling of diazotised 3-aminophthalic acid p-tolylimide with an aminopyrimidine containing an ethylthio group in an unspecified position.

It has now been found that disperse dyes having improved affinity for aromatic polyester textile materials and/or improved light fastness thereon may be prepared by coupling the diazo components hereinafter described with an aminopyrimidine coupling component having an optionally substituted alkylthio, aralkylthio or arylthio substituent in the 2-position of the pyrimidine ring.

The present invention relates to disperse azopyrimidine dyestuffs having the general formula (I):

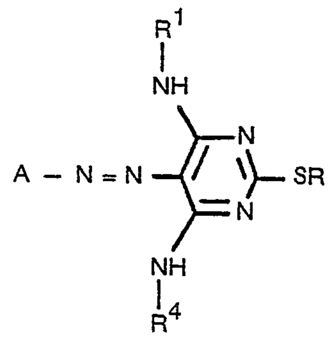

(I)

wherein A is the residue of a diazo component selected from one of the following classes:

(a) 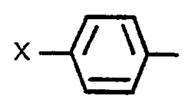

wherein X is Br, F, I, $CF_3$, $NO_2$, CN, SCN, carboxylic acid ester, carboxylic acid amide, alkylsulphonyl, arylsulphonyl, alkylthio, arylthio, sulphonic acid ester, sulphonic acid amide, alkoxy, aryloxy, optionally substituted phenylazo, acyl, acylamino or hydroxy;

(b) 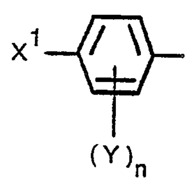

wherein $X^1$ is an electron-withdrawing substituent, Y is a non-water solubilising substituent and n is 1 to 4;

(c) 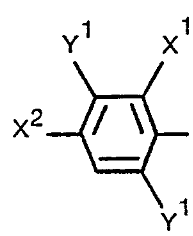

wherein $X^1$ has the meaning stated in (b), each $Y^1$ is independently H or Y wherein Y has the meaning stated in (b) and $X^2$ is H, hydrocarbyl or acylamino;

(d) 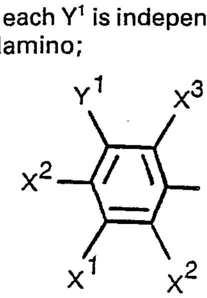

wherein $X^1$, $X^2$ and $Y^1$ have the meanings stated above and $X^3$ is X or $X^2$;

(e) 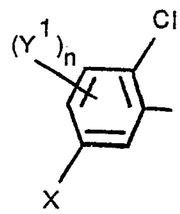

wherein X and $Y^1$ have the meanings stated above;

(f) 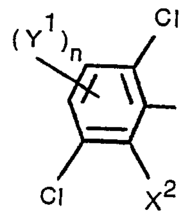

wherein $X^2$ and $Y^1$ have the previously defined meanings and n is 1 or 2;

(g) 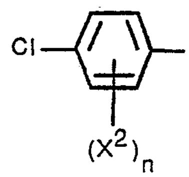

wherein $X^2$ has the previously defined meaning and n is 1 to 3; and

(h) a heterocyclic residue;

$R^1$ and $R^4$ are each independently hydrogen, optionally substituted alkyl, optionally substituted aralkyl or optionally substituted aryl, and

R is optionally substituted alkyl, optionally substituted aralkyl or optionally substituted aryl, provided that when A is in class (f) or class (g) then $R^1$ and $R^4$ are not both hydrogen.

The carboxylic acid ester group represented by X may be, for example, alkoxycarbonyl or alkoxyalkoxycarbonyl groups in which the alkoxy preferably contains from 1 to 4 carbon atoms, such as methoxycarbonyl, ethoxycarbonyl, β-methoxyethoxycarbonyl and β-ethoxyethoxycarbonyl; phenoxycarbonyl groups which may be substituted for example, by chlorine, bromine, nitro, cyano, ($C_1$—$C_4$) alkyl or ($C_1$—$C_4$) alkoxy; or the carboxylic acid ester groups may be alkylcarbonyloxy groups, preferably ($C_1$—$C_4$) alkylcarbonyloxy groups such as acetoxy or propionyloxy.

The alkylsulphonyl and alkylthio groups represented by X are preferably ($C_1$—$C_4$) alkylsulphonyl and ($C_1$—$C_4$) alkylthio groups and may be substituted. Examples of such groups are methylsulphonyl, ethylsulphonyl, methylthio and ethylthio.

The arylsulphonyl and arylthio groups represented by X are preferably phenylsulphonyl and phenylthio groups and may be substituted. Examples of such substituted groups are tolylsulphonyl and tolylthio groups.

The carboxylic acid amide and sulphonic acid amide groups represented by X are preferably of the formula:

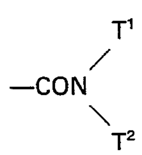 or 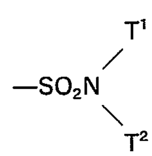

in which $T^1$ and $T^2$ are each independently hydrogen, alkyl (preferably $C_1$—$C_4$ alkyl) or aryl (preferably phenyl). Examples of such groups are aminocarbonyl, methylaminocarbonyl, dimethylaminocarbonyl, ethylaminocarbonyl, diethylaminocarbonyl, phenylaminocarbonyl, N-ethyl-N-phenylaminocarbonyl, aminosulphonyl, methylaminosulphonyl, dimethylaminosulphonyl, ethylaminosulphonyl, diethylaminosulphonyl, phenylaminosulphonyl and N-ethyl-N-phenylaminosulphonyl. When $T^1$ and $T^2$ are alkyl groups they may, together with the nitrogen atom to which they are attached, form a 5- or 6-membered heterocyclic ring, for example, the morpholine, pyrrolidine or piperidine ring.

Examples of sulphonic acid ester groups represented by X are methoxysulphonyl and phenoxysulphonyl.

The alkoxy groups represented by X are preferably ($C_1$—$C_4$) alkoxy such as methoxy, ethoxy, *iso*propoxy and *n*-butoxy.

The aryloxy groups represented by X are preferably phenoxy groups which may be substituted.

Examples of the substituted phenylazo groups represented by X are tolylazo, chlorophenylazo, bromophenylazo, nitrophenylazo and methoxyphenylazo.

The acyl groups represented by X may be, for example, optionally substituted alkylcarbonyl and preferably ($C_1$—$C_4$) alkylcarbonyl groups such as acetyl, propionyl, chloroacetyl and β-chloropropionyl groups, and optionally substituted acylcarbonyl groups such as benzoyl, toluoyl, chlorobenzoyl or nitrobenzoyl groups.

The acylamino groups represented by X are of the formula —NHCO.W in which W is alkyl [preferably ($C_1$—$C_4$) alkyl], aryl (preferably phenyl), alkoxy [preferably ($C_1$—$C_4$) alkoxy], aryloxy (preferably phenoxy) or amino optionally substituted by alkyl [preferably ($C_1$—$C_4$) alkyl] or aryl (preferably phenyl). Examples of such acylamino groups are acetylamino, propionylamino, benzoylamino, methoxycarbonylamino, ethoxycarbonylamino, phenoxycarbonylamino, ureido, N-methylureido, N,N-dimethylureido, N-ethylureido, N,N-diethylureido and N-methyl-N-phenylureido.

Examples of the electron-withdrawing groups represented by $X^1$ are nitro, chlorine, bromine, cyano, alkoxycarbonyl and preferably ($C_1$—$C_4$) alkoxycarbonyl such as methoxycarbonyl, ethoxycarbonyl, *iso*propoxycarbonyl and *n*-butoxycarbonyl; alkylsulphonyl, preferably ($C_1$—$C_4$) alkylsulphonyl such as methylsulphonyl and ethylsulphonyl; and carboxylic acid amide and sulphonic acid amide groups of the preferred formulae hereinbefore defined for X.

Examples of the non water-solubilising groups represented by Y are any of the groups represented by $X^1$ and in addition $CF_3$, alkoxy, preferably ($C_1$—$C_4$) alkoxy such as methoxy and ethoxy, and alkyl, preferably ($C_1$—$C_4$) alkyl such as methyl, ethyl, *n*-propyl, *iso*propyl and *n*-butyl.

The hydrocarbyl group represented by $X^2$ may be an alkyl group, preferably a ($C_1$—$C_4$) alkyl group such as methyl or ethyl, or an aryl group, preferably a phenyl group.

The heterocyclic residue represented by A may be the residue of any amino heterocyclic compound known from the literature as a diazo component, for example, the residue of a thiazole, benzthiazole, benzisothiazole, thiadiazole, thiophene, indazole or pyrazole compound.

The optionally substituted alkyl groups represented by R, $R^1$ and $R^4$ are preferably ($C_1$—$C_4$) alkyl groups and the substituents, when present, may be, for example, hydroxy, cyano or alkoxycarbonyl preferably ($C_1$—$C_4$) alkoxycarbonyl. Examples of such optionally substituted alkyl groups are methyl, ethyl, β-hydroxyethyl, β-cyanoethyl, methoxycarbonylmethyl and (β-methoxycarbonyl)ethyl.

The optionally substituted aralkyl groups represented by R, $R^1$ and $R^4$ are preferably optionally substituted phenylalkyl groups, more particularly optionally substituted phenyl ($C_1$—$C_4$) alkyl groups such as benzyl and β-phenylethyl groups which may carry substituents such as halogen, ($C_1$—$C_4$) alkyl, ($C_1$—$C_4$) alkoxy and nitro on the benzene nuclei thereof.

The optionally substituted aryl groups represented by R, $R^1$ and $R^4$ are preferably optionally substituted phenyl groups, and examples of the substituents which may be present thereon are halogen, ($C_1$—$C_4$) alkyl, ($C_1$—$C_4$) alkoxy and nitro.

Preferred dyestuffs of the present invention have one or more of the following features:

(1) A is the residue of a diazo component selected from class (a) or (b) as defined above and especially when in class (a) X is Br, F, I, $CF_3$, $NO_2$, CN, $C_{1-4}$ alkoxycarbonyl, $C_{1-4}$ alkylsulphonyl, phenyloxysulphonyl in which the phenyl is substituted by 0—3 substituents each selected from halogen, $C_{1-4}$ alkyl or $C_{1-4}$ alkoxy; $H_2NSO_2$, $C_{1-4}$ alkylamino sulphonyl, di($C_{1-4}$ alkyl)aminosulphonyl, $C_{1-4}$ alkoxy, $C_{1-4}$ acyl, $C_{1-4}$ acylamino or phenylazo in which the phenyl radical may be substituted with Cl or any of the atoms or groups previously mentioned; and when in class (b) $X^1$ is Cl, Br, F, I, $NO_2$, CN, $CF_3$, $C_{1-4}$ alkoxycarbonyl, $C_{1-4}$ alkyl sulphonyl, $H_2NSO_2$, $C_{1-4}$ alkylaminosulphonyl, di($C_{1-4}$ alkyl) aminosulphonyl or phenylazo as defined above; Y is Cl or any group as defined for X in this item (1) and n is 1 or 2.

(2) A is the residue of a diazo component selected from class (c) wherein $X^1$ has the meanings given above in (1); each $Y^1$ is independently H or has the meanings given in (1) for Y and $X^2$ is H, $C_{1-4}$ alkyl or $C_{1-4}$ acylamino.

(3) R is optionally substituted alkyl or aralkyl. Especially preferred aralkyl groups are benzyl and β-phenyl ethyl. Especially preferred optionally substituted alkyl groups are $C_{1-4}$ alkyl groups with 0—2 substituents each selected from halogen, hydroxy, cyano, $C_{1-4}$ alkoxy or $C_{1-4}$ alkoxycarbonyl.

(4) $R^1$ and $R^4$ are each independently H or optionally substituted alkyl especially those defined in (3).

Specific examples of such optionally substituted alkyl groups are methyl, ethyl, *iso*propyl, *n*-butyl, β-chloroethyl, β-bromoethyl, γ-chloro-β-hydroxypropyl, β-cyanoethyl, β-hydroxyethyl, β-methoxyethyl and β-ethoxyethyl.

An especially preferred class of dyestuffs according to the invention is of the general formula (III):

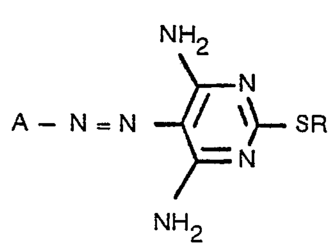

(III)

wherein A has the meanings defined in (1) or (2) above and R is optionally substituted alkyl as defined in (3) above.

According to a further feature of the invention there is provided a process for the preparation of the dyestuffs of formula (I) which comprises diazotising an amine of the formula (IV):

$$A\text{—}NH_2 \qquad (IV)$$

and coupling the diazonium compound so obtained with a coupling component of formula (V):

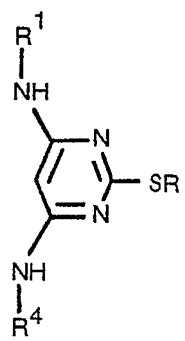

(V)

wherein A, R, $R^1$ and $R^4$ have the previously defined meanings.

Examples of amines of formula (IV) which provide residues of diazo components A in classes (a) to (h) as hereinbefore defined are:

in class (a): 4-nitroaniline, 4-cyanoaniline, 4-methoxyaniline, 4-(methylthio)aniline, 4-(methylsulphonyl)aniline, 4-(methoxycarbonyl)aniline, 4-(ethoxycarbonyl)aniline, 4-aminoacetophenone, 4-aminoazobenzene, 4-aminobenzenesulphonamide, 4-aminobenzenesulphon-N-methylamide, 4-aminobenzenesulphon-N,N-dimethylamide, 4-thiocyanatoaniline, 4-fluoroaniline, 4-bromoaniline, 4-[(β-ethoxy)ethoxycarbonyl]aniline, methyl 4-aminobenzenesulphonate and 4-aminobenz-N,N-diisopropylamide.

in class (b): 2,4-dinitroaniline, 2-chloro-4-nitroaniline, 2-cyano-4-nitroaniline, 2-methoxy-4-nitroaniline, 4-chloro-2-methoxyaniline, 3,4-dichloroaniline, 3,4-dicyanoaniline, 2,4-dichloroaniline, 2,4-dicyanoaniline, 2,6-dichloro-4-nitroaniline, 2-bromo-6-chloro-4-nitroaniline, 4-chloro-2-nitroaniline, 4-chloro-3-nitroaniline, 4-(ethoxycarbonyl)-2-nitroaniline, 2-chloro-4-ethylsulphonylaniline, 2-methylaminosulphonyl-4-nitroaniline, 4-ethylaminosulphonyl-2-nitroaniline, 2-(isopropoxycarbonyl)-4-nitroaniline, 4-nitro-2-trifluoromethylaniline, 2-ethoxycarbonyl-4-nitroaniline, 3,4-bis(methoxycarbonyl)aniline, 3-chloro-6-methyl-4-nitroaniline and 2-hydroxy-4-nitroaniline.

in class (c): 2-nitroaniline, 2-chloroaniline, 2-bromoaniline, 2-methoxycarbonylaniline, 2-ethoxycarbonylaniline, 2-cyanoaniline, 2-methoxy-5-methylaniline, 2-cyano-3-methoxyaniline, 2,6-dicyanoaniline, 2-amino-6-methoxybenzamide, 2-acetoxyaniline, 2-methyl-6-nitroaniline, 2-(*n*-butoxycarbonyl)aniline, 2,3-bis(ethoxycarbonyl)aniline, 2-cyano-4-methylaniline, 2-amino-6-ethoxybenzamide, 2-amino-4,4′-dimethylazobenzene, 2-aminophenol and 4-amino-3-nitrodiphenyl.

in class (d): 5-chloro-2-ethoxyaniline, 5-chloro-2-methoxyaniline, 3-nitroaniline, 2,4-dimethyl-5-nitroaniline, 3-chloro-2-methylaniline, 5-ethoxy-2-methylaniline, 3,5-dimethoxyaniline, 3,5-dinitroaniline, 3-methoxy-5-nitroaniline, 3-ethoxy-5-nitroaniline, 3,5-dichloroaniline, 4-methyl-3-nitroaniline, 3-aminobenzenesulphonamide, 3-nitro-5-trifluoromethylaniline, 2,5-difluoroaniline, 3,5-bis(methoxycarbonyl)aniline, 3,5-bis(aminosulphonyl)aniline, 2-bromo-5-nitroaniline, 5-bromo-2-methylaniline and 3-trifluoromethylaniline.

in class (e): 3-amino-4-chloroacetophenone, 3-amino-4-chlorobenzenesulphonamide, 2-chloro-5-cyanoaniline, 2-chloro-5-ethoxycarbonylaniline and 2-chloro-4-methyl-5-nitroaniline.

in class (f): 2,5-dichloro-4-methylaniline and 2,5-dichloroaniline.

in class (g): 4-chloro-3-methylaniline and 4-chloro-2-methylaniline.

in class (h): 2-aminothiazole, 2-amino-3,5-dinitrothiophene, 2-amino-3-ethoxycarbonyl-5-nitrothiophene, 2,4-dicyanothiophene, 2-amino-6-thiocyanatobenzthiazole and 2-amino-6-methoxybenzthiazole.

Examples of the coupling components of formula (V) which may be used are 4,6-diamino-2-methylthiopyrimidine, 4,6-diamino-2-ethylthiopyrimidine, 4,6-diamino-2-isopropylthiopyrimidine, 4,6-diamino-2-*n*-butylthiopyrimidine, 4,6-diamino-2-(β-cyanoethyl)thiopyrimidine, 4,6-diamino-6-benzylthiopyrimidine, 4,6-diamino-2-(2-hydroxybutyl)thiopyrimidine, 4,6-di(methylamino)-2-methylthiopyrimidine, 4-anilino-6-β-hydroxyethylamino-2-methylthiopyrimidine, 4,6-diamino-2-[2,3-bis(ethoxycarbonyl)]propylthiopyrimidine, 4,6-diamino-2-(methoxycarbonylmethyl)thiopyrimidine, 4,6-diamino-2-(methoxycarbonylethyl)thiopyrimidine, 4,6-di(methylamino)-2-(methoxycarbonylmethyl)thiopyrimidine, 4,6-di(methoxycarbonylmethylamino)-2-methylthiopyrimidine and 4,6-di[(β-methoxycarbonyl)ethylamino]-2-methylthiopyrimidine.

Two general methods were employed for the preparation of the coupling components of formula (V).

Method 1 comprises treating 4,6-diamino-2-mercaptopyrimidine (a known compound obtained by reacting thiourea with malononitrile) with an alkylating agent, for example, dimethyl sulphate or methyl iodide, to give the S-alkyl derivative. Further alkylation can give 2-alkylthio-4- and/or 6-(N-alkylamino)pyrimidines.

Method 2 comprises S-alkylation of 4,6-dihydroxy-2-mercaptopyrimidine (a known compound obtained by reacting thiourea with an ester of malonic acid, e.g. diethyl malonate), conversion of the 2-alkylthio-4,6-dihydroxypyrimidine so obtained into the corresponding 2-alkylthio-4,6-dichloropyrimidine by reaction with, for example, phosphorus oxychloride and finally reacting the dichloro compound with ammonia or an appropriately-substituted amine. The two chlorine atoms may be replaced stepwise, so that the (substituted) amino groups in the 4- and 6-positions of the pyrimidine nucleus need not be the same.

In general, method 1 is used for preparing the pyrimidines containing two free amino groups and method 2 for the pyrimidines containing one or more substituted amino groups.

The diazotisation and coupling may be carried out by known methods for these reactions. For example, the process may be carried out by adding sodium nitrite to a solution or dispersion of the amine A—$NH_2$ in hydrochloric acid or aqueous sulphuric acid, or to a solution of the amine in concentrated sulphuric acid, or a mixture of concentrated sulphuric acid with an organic acid such as acetic acid and/or propionic acid, or by stirring the amine with nitrosylsulphuric acid, followed by addition of the resulting solution or dispersion of the diazonium compound to a solution of the coupling component in water or in a mixture of water and a water-miscible organic liquid, if necessary adjusting the pH of the mixture to facilitate the coupling reaction, and finally isolating the resulting dyestuff by conventional methods.

According to a further feature of the invention there is provided a process for colouring aromatic polyester textile materials which comprises applying thereto a dyestuff of formula (I) as hereinbefore defined, in conjunction with a heat treatment to effect fixation of the dyestuff on the textile material.

The dyestuff may be applied to the textile material in the form of an aqueous dispersion which may be prepared by conventional methods, for example, by milling the dyestuff with water and a suitable dispersing agent such as the sodium salt of a naphthalene-2-sulphonic acid/formaldehyde condensate.

The dyestuff may also be applied to textile materials fabricated from blends of aromatic polyester and cellulosic fibres.

The above-defined colouration process may conveniently be carried out by immersing the textile material in an aqueous dyebath containing one or more of the said dyestuffs, which dyebath preferably contains a non-ionic, cationic or anionic surface-active agent, or a cationic or anionic surface-active agent together with a non-ionic surface-active agent, and thereafter heating the dyebath for a period at a suitable temperature. The dyeing process can either be carried out at a temperature between 90 and 100°C, preferably in the presence of a carrier such as biphenyl or *o*-hydroxybiphenyl, or at a temperature above 100°C, preferably at a temperature between 120° and 140°C, under superatmospheric pressure.

Alternatively, the aqueous dispersion of the dyestuff can be applied to the textile material by a padding or printing process, followed by heating at temperatures up to 230°C, or by steaming of the textile material. In such processes it is preferred to incorporate a thickening agent, such as gum tragacanth, gum arabic or sodium alginate, into the aqueous dispersion of the said dyestuff.

At the conclusion of the colouring process it is preferred to give the coloured textile material a "reduction clear" treatment in a warm, dilute aqueous alkaline solution of sodium hydrosulphite in order to remove any unfixed azo dyestuff from the surface of the textile material. In the case of those dyestuffs which are soluble in aqueous alkali or which contain at least one group which is converted into a water-solubilising group by the action of aqueous alkali, the treatment with sodium hydrosulphite may be omitted, a simple treatment with warm dilute aqueous alkali free from reducing agent being sufficient to remove unfixed dyestuff.

The dyestuffs may also be applied to aromatic polyester textile materials by known methods of transfer colour printing such as sublimation transfer printing, optionally under reduced pressure, and wet transfer printing.

The dyestuffs also find application for the melt colouration of polymers such as aromatic polyesters, and can also be used as pigments for the colouration of inks and paints, such dyestuffs being incorporated in known manner into conventional ink or paint formulations.

The dyestuffs of the invention have excellent dyeing properties on aromatic polyester textile materials, to which they impart very bright yellow to red shades having excellent wet fastness, light fastness and pH stability. Excellent results are also obtained when the dyestuffs are applied by carrier dyeing methods.

The invention is illustrated by the following Examples in which parts and percentages are by weight.

Example 1

4-Nitroaniline (1.38 parts) suspended in 2N hydrochloric acid (10 parts) and water (40 parts) at 0—5°C was diazotised by the addition of 5N-aqueous sodium nitrite solution (1.2 parts).

4,6-Diamino-2-ethylthiopyrimidine (1.87 parts) was dissolved in acetic acid (20 parts) and water (70 parts) and the solution was cooled to 0—5°C. The suspension of diazotised 4-nitroaniline is added to the

pyrimidine solution at 0—5°C and the pH of the mixture was adjusted to 4 by the addition of sodium acetate crystals. The mixture was stirred at 0—5°C for 18 hours and the precipitated dyestuff collected, washed with water dried and purified by crystallisation from monochlorobenzene. The dyestuff had $\lambda_{max}$ ($CHCl_3$) 424 nm, $\varepsilon_{max}$ 31,300.

When applied to aromatic polyester textile material from an aqueous dispersion a bright golden-yellow shade is obtained having excellent fasteness to washing, light and changes of pH.

Examples 2 to 14

The following dyestuffs were obtained by diazotising in known manner the amine given in the second column of the table and coupling the resulting diazonium compound with the coupling component given in the third column of the table, using essentially the method described in Example 1. The shade obtained when each dyestuff was applied to aromatic polyester textile material is given in the fourth column and the $\lambda_{max}$ ($CHCl_3$) and $\varepsilon_{max}$ values for each dyestuff ($\varepsilon_{max}$ in parentheses) are listed in the final column.

| Example | Amine | Coupling component | Shade | $\lambda_{max}$ ($\varepsilon_{max}$) |
|---|---|---|---|---|
| 2 | 2,4-dinitroaniline | 4,6-diamino-2-ethylthio-pyrimidine | orange | 473 |
| 3 | 2-chloro-4-nitro-aniline | 4,6-diamino-2-ethylthio-pyrimidine | orange | 442 (31122) |
| 4 | 2-nitroaniline | 4,6-diamino-2-ethylthio-pyrimidine | yellow | 408 (23088) |
| 5 | 4-nitroaniline | 4,6-diamino-2-methylthio-pyrimidine | reddish-yellow | 424 (29719) |
| 6 | 3-nitroaniline | 4,6-diamino-2-methylthio-pyrimidine | greenish-yellow | 394 (28700) |
| 7 | 2-chloro-4,6-dinitro-aniline | 4,6-diamino-2-methylthio-pyrimidine | orange | 462 (28750) |
| 8 | 2-amino-3,5-dinitro-thiophene | 4,6-diamino-2-methylthio-pyrimidine | bluish-red | 538 (36000) |
| 9 | 4-aminoazobenzene | 4,6-diamino-2-methylthio-pyrimidine | yellowish-orange | — |
| 10 | 4-nitroaniline | 4,6-diamino-2-benzylthio-pyrimidine | reddish-yellow | 424 (30702) |
| 11 | 4-nitroaniline | 4,6-diamino-2-β-cyanoethyl-thiopyrimidine | reddish-yellow | 420 (27425) |
| 12 | 4-nitroaniline | 4,6-diamino-2-*n*-butylthio-pyrimidine | reddish-yellow | 425 (32393) |
| 13 | 4-nitroaniline | 4,6-bis(methylamino)-2-methylthiopyrimidine | orange | 469 (37296) |
| 14 | 4-nitroaniline | 4,6-diamino-2-*iso*propylthio-pyrimidine | reddish-yellow | 426 (32159) |

The coupling components used in the above Examples were obtained as follows:

4,6-Diamino-2-ethylthiopyrimidine was prepared as described in *Bull. Soc. Chim. France,* 963—972 (1948).

4,6-Diamino-2-methylthiopyrimidine was obtained as described in *J. Amer. Chem. Soc., 74,* 1644—1647 (1952).

2-Benzylthio-4,6-diaminopyrimidine was obtained by general method 1 as hereinbefore described. The compound has m.p. 133—134°C.

| | |
|---|---|
| Found: | C 57.2; H 5.1; N 24.2; S 14.2%. |
| $C_{11}H_{12}N_4S$ requires: | C 57.1; H 4.8; N 24.2; S 13.9%. |

2-(β-cyanoethyl)thio-4,6-diaminopyrimidine was prepared using general method 1 and has m.p. 181—182°C.

| | |
|---|---|
| Found: | C 43.0; H 4.3; N 35.4; S 16.3%. |
| $C_7H_9N_5S$ requires: | C 43.1; H 4.6; N 36.1; S 16.4%. |

2-*n*-Butylthio-4,6-diaminopyrimidine was prepared using general method 1 and has m.p. 92—93°C.

| | |
|---|---|
| Found: | C 49.1; H 7.6; N 28.7; S 15.9%. |
| $C_8H_{14}N_4S$ requires: | C 48.5; H 7.1; N 28.3; S 16.2%. |

4,6-Bis(methylamino)-2-methylthiopyrimidine was prepared using general method 2.

| | |
|---|---|
| Found: | C 44.7; H 6.7; N 30.1; S 16.4%. |
| $C_7H_{12}N_4S$ requires: | C 45.6; H 6.5; N 30.4; S 17.4%. |

4,6-Diamino-2-isopropylthiopyrimidine was prepared using general method 1 and has m.p. 111—112°C.

| | |
|---|---|
| Found: | C 45.9; H 6.7; N 30.3; S 17.9%. |
| $C_7H_{12}N_4S$ requires: | C 45.6; H 6.5; N 30.4; S 17.4%. |

Examples 15 to 29

The following table details further dyestuffs which were obtained in a similar fashion to those of Examples 2 to 14.

| Example | Amine | Coupling component | Shade | $\lambda_{max}$ ($\varepsilon_{max}$) |
|---|---|---|---|---|
| 15 | 2-chloro-4,6-dinitro-aniline | 4,6-bis(methylamino)-2-methyl-thiopyrimidine | red | 490 (33400) |
| 16 | 2-chloro-4-nitro-aniline | 4,6-bis(methylamino)-2-methyl-thiopyrimidine | orange | 450 (33000) |
| 17 | 2,4-dinitroaniline | 4,6-bis(methylamino)-2-methyl-thiopyrimidine | red | 495 (35000) |
| 18 | 2-bromo-4-nitro-aniline | 4,6-bis(methylamino)-2-methyl-thiopyrimidine | orange | 452 (32000) |
| 19 | 4-aminoazobenzene | 4,6-bis(methylamino)-2-methyl-thiopyrimidine | orange | 462 (31000) |
| 20 | 2-amino-3,5-dinitro-thiophene | 4,6-bis(methylamino)-2-methyl-thiopyrimidine | blue | 561 (32000) |
| 21 | 2-amino-3,5-dicyano-4-methylthiophene | 4,6-bis(methylamino)-2-methyl-thiopyrimidine | bluish-red | 530 (30500) |
| 22 | 4-nitroaniline | 4,6-bis(2-hydroxyethylamino)-2-methylthiopyrimidine | orange | 476 (33400) |
| 23 | 4-nitroaniline | 4,6-bis(2-acetoxyethylamino)-2-methylthiopyrimidine | orange | 474 (32000) |
| 24 | 4-nitroaniline | 4,6-diamino-2-(2-hydroxy)butyl-thiopyrimidine | reddish-yellow | 424 (34000) |
| 25 | 2-chloro-4-nitro-aniline | 4,6-diamino-2-*n*-butylthio-pyrimidine | orange | 440 (31500) |
| 26 | 2-bromo-6-cyano-4-nitroaniline | 4,6-diamino-2-*n*-butylthio-pyrimidine | scarlet | 450 (35000) |
| 27 | 2-chloro-5-nitro-aniline | 4,6-diamino-2-*n*-butylthio-pyrimidine | greenish-yellow | 409 (27700) |
| 28 | 2-chloro-4-nitro-aniline | 4,6-diamino-2-*n*-propylthio-pyrimidine | golden yellow | 439 (29700) |
| 29 | 4-nitroaniline | 4,6-diamino-2-*n*-propylthio-pyrimidine | yellow | 424 (30000) |

Examples 30—994

Further dyestuffs of the invention can be obtained by reacting the diazonium salt of the amines in Table 2 with the coupling components in Table 3 in the combinations detailed in Table 4 using the general procedure detailed in Example 1.

TABLE 2

| Amine | |
|---|---|
| A | 4-nitroaniline |
| B | 4-cyanoaniline |
| C | 4-methoxyaniline |
| D | 4-(ethoxycarbonyl)aniline |
| E | 4-aminoazobenzene |
| F | 4-bromoaniline |
| G | 4-aminobenzene sulphonate |
| H | 2-nitroaniline |
| I | 2-chloroaniline |
| J | 2,4-dinitroaniline |
| K | 2-chloro-4-nitroaniline |
| L | 2-cyano-4-nitroaniline |
| M | 2-methoxy-4-nitroaniline |
| N | 2-cyanoaniline |
| O | 2,6-dicyanoaniline |
| P | 2-cyano-4-methylaniline |
| Q | 3,5-dinitroaniline |
| R | 3,4-dicyanoaniline |
| S | 2,4-dicyanoaniline |
| T | 2,6-dichloro-4-nitroaniline |
| U | 2-bromo-6-chloro-4-nitroaniline |
| V | 4-chloro-3-nitroaniline |
| W | 2-ethoxycarbonyl-4-nitroaniline |
| X | 2-bromo-5-nitroaniline |
| Y | 2-chloro-5-cyanoaniline |
| Z | 2-aminothiazole |
| AA | 2-amino-3,5-dinitrothiophene |
| AB | 2-amino-3-ethoxycarbonyl-5-nitrothiophene |
| AC | 2-amino-3,5-dicyano-4-methylthiophene |
| AD | 2-amino-6-thiocyanatobenzthiazole |

TABLE 2 (cont.).

| Amine | |
|---|---|
| AE | 2-amino-6-methoxybenzthiazole |
| AF | 4-aminoacetophenone |
| AG | 4-aminobenzene sulphonamide |
| AH | 2,4-dichloroaniline |
| AI | 2-hydroxy-4-nitroaniline |
| AJ | 3-nitroaniline |
| AK | 2-amino-5-nitrothiazole |
| AL | 2,6-dicyano-4-nitroaniline |
| AM | 2-cyano-6-bromo-4-nitroaniline |
| AN | 2-chloro-5-nitroaniline |
| AO | 4-N-methylaminosulphonylaniline |
| AP | 4-N,N-dimethylaminosulphonylaniline |
| AQ | 4-phenoxysulphonylaniline |
| AR | 4-acetylaminoaniline |

TABLE 3

| Coupling component | |
|---|---|
| 1 | 4,6-diamino-2-methylthiopyrimidine |
| 2 | 4,6-diamino-2-ethylthiopyrimidine |
| 3 | 4,6-diamino-2-*n*-propylthiopyrimidine |
| 4 | 4,6-diamino-2-*iso*propylthiopyrimidine |
| 5 | 4,6-diamino-2-*n*-butylthiopyrimidine |
| 6 | 4,6-diamino-2-(β-cyanoethyl)thio-pyrimidine |
| 7 | 4,6-diamino-2-benzylthiopyrimidine |
| 8 | 4,6-diamino-2-(2-hydroxybutyl)thio pyrimidine |
| 9 | 4,6-diamino-2-[2,3-bis(ethoxycarbonyl)] n-propyl pyrimidine |
| 10 | 4,6-diamino-2-(methoxycarbonylmethyl) thiopyrimidine |
| 11 | 4,6-diamino-2-(methoxycarbonylethyl)-thiopyrimidine |

TABLE 3 (cont.).

| Coupling component | |
|---|---|
| 12 | 4,6-di(methylamino)-2-methylthio-pyrimidine |
| 13 | 4,6-di(methylamino)-2-n-propylthio-pyrimidine |
| 14 | 4,6-di(methylamino)-2-ethylthio-pyrimidine |
| 15 | 4,6-di(ethylamino)-2-ethylthio-pyrimidine |
| 16 | 4,6-di(ethylamino)-2-methylthio-pyrimidine |
| 17 | 4,6-di(ethylamino)-2-*n*-butylthio-pyrimidine |
| 18 | 4,6-di(anilino)-2-methylthiopyrimidine |
| 19 | 4,6-di(4-chloroanilino)-2-ethylthio-pyrimidine |
| 20 | 4,6-di(butylamino)-2-ethylthio-pyrimidine |
| 21 | 4,6-di(methylamino)-2-(methoxycarbonyl-methyl)thiopyrimidine |
| 22 | 4,6-di(methoxycarbonylmethylamino)-2-methylthiopyrimidine |
| 23 | 4,6-di[(β-methoxycarbonyl)ethylamino]-2-methylthiopyrimidine |
| 24 | 4,6-di(methoxycarbonylmethylamino)-2-propylthiopyrimidine |
| 25 | 4,6-di(2-hydroxyethylamino)-2-methyl-thiopyrimidine |
| 26 | 4,6-di(2-hydroxyethylamino)-2-n-propyl-thiopyrimidine |
| 27 | 4,6-di(2-acetoxyethylamino)-2-methyl-thiopyrimidine |
| 28 | 4,6-di(3-methoxypropylamino)-2-ethyl-thiopyrimidine |
| 29 | 4-amino-6-(2-hydroxyethylamino)-2-ethyl-thiopyrimidine |
| 30 | 4-amino-6-anilino-2-ethylthiopyrimidine |
| 31 | 4-(2-hydroxyethylamino)-6-(3-methoxypropyl-amino)-2-ethylthiopyrimidine |

TABLE 3 (cont.).

| Coupling component | |
|---|---|
| 32 | 4-ethylamino-6-*n*-propylamino-2-*n*-propyl-thiopyrimidine |
| 33 | 4-amino-6-methylamino-2-ethylthio-pyrimidine |
| 34 | 4-amino-6-β-chloroethylamino-2-ethyl-thiopyrimidine |
| 35 | 4-amino-6-β-cyanoethylamino-2-*n*-propyl-thiopyrimidine |

TABLE 4

| Example No. | Amine | Coupling component |
|---|---|---|
| 30—54 | A | 2, 9 to 11, 13 to 24, 26, 28 to 35 |
| 55—90 | B | 1 to 35 |
| 91—98 | C | 1 to 7 |
| 99—106 | D | 1 to 7 |
| 107—140 | E | 2 to 11, 13 to 35 |
| 141—176 | F | 1 to 35 |
| 177—182 | G | 1 to 5 |
| 183—217 | H | 1, 3 to 35 |
| 218—225 | I | 1 to 5, 14, 15 |
| 226—259 | J | 1, 3 to 11, 13 to 35 |
| 260—291 | K | 1, 4, 6 to 11, 13 to 35 |
| 292—305 | L | 1 to 5 |
| 298—305 | M | 1 to 4, 9, 16, 18 |
| 306—314 | N | 2 to 8, 15 |
| 315—350 | O | 1 to 35 |
| 351—359 | P | 2 to 6, 25, 32, 35 |
| 360—395 | Q | 1 to 35 |
| 396—403 | R | 1 to 5, 26, 34 |
| 404—439 | S | 1 to 35 |
| 440—475 | T | 1 to 35 |
| 476—486 | U | 1 to 7, 17, 20, 29 |

TABLE 4 (cont.).

| Example No. | Amine | Coupling component |
|---|---|---|
| 487—497 | V | 2 to 11 |
| 498—505 | W | 1 to 3, 5, 13, 16, 22 |
| 506—514 | X | 1 to 8 |
| 515—524 | Y | 2 to 6, 14, 19, 20, 35 |
| 525—560 | Z | 1 to 35 |
| 561—594 | AA | 2 to 11, 13 to 35 |
| 595—630 | AB | 1 to 35 |
| 631—664 | AC | 1 to 11, 13 to 35 |
| 665—672 | AD | 1 to 5, 10, 18 |
| 673—708 | AE | 1 to 35 |
| 709—718 | AF | 1 to 7, 14, 25 |
| 719—729 | AG | 2 to 8, 15, 23, 34 |
| 730—738 | AH | 1 to 5, 11, 17, 21 |
| 739—749 | AI | 1 to 8, 28, 33 |
| 750—784 | AJ | 2 to 35 |
| 785—820 | AK | 1 to 35 |
| 821—829 | AL | 1 to 4, 8, 12, 20, 29 |
| 830—864 | AM | 1 to 4, 6 to 35 |
| 865—900 | AN | 1 to 35 |
| 901—912 | AO | 1 to 6, 9, 14, 19, 22, 31 |
| 913—923 | AP | 2 to 7, 10, 13, 18, 28 |
| 924—932 | AQ | 1 to 5, 8, 15, 34 |
| 933—944 | AR | 1 to 6, 11, 17, 20, 25, 35 |

**Claims**

1. Dyestuffs of the general formula (I):

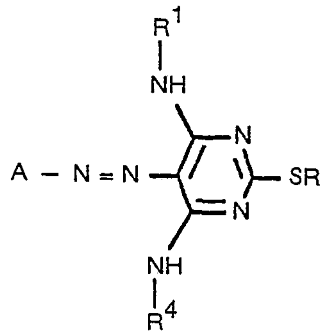

(I)

wherein A is the residue of a diazo component selected from one of the following classes:

(a) 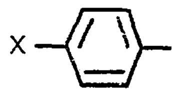

wherein X is Br, F, I, $CF_3$, $NO_2$, CN, SCN, carboxylic acid ester, carboxylic acid amide, alkylsulphonyl, arylsulphonyl, alkylthio, arylthio, sulphonic acid ester, sulphonic acid amide, alkoxy, aryloxy, optionally substituted phenylazo, acyl, acylamino or hydroxy;

(b) 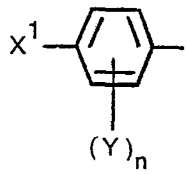

wherein $X^1$ is an electron-withdrawing substituent, Y is a non-water solubilising substituent and n is 1 to 4;

(c) 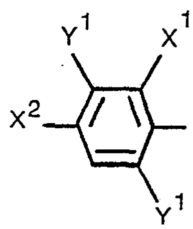

wherein $X^1$ has the meaning stated in (b), each $Y^1$ is independently H or Y wherein Y has the meaning stated in (b) and $X^2$ is H, hydrocarbyl or acylamino;

(d) 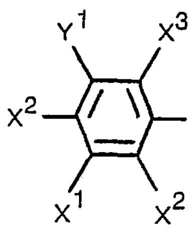

wherein $X^1$, $X^2$ and $Y^1$ have the meanings stated above and $X^3$ is X or $X^2$;

(e) 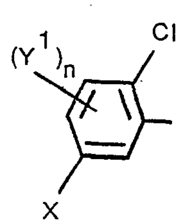

wherein X and $Y^1$ have the meanings stated above;

(f) 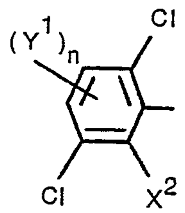

wherein $X^2$ and $Y^1$ have the previously defined meanings and n is 1 or 2;

(g) 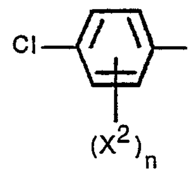

wherein $X^2$ has the previously defined meaning and n is 1 to 3; and

(h) a heterocyclic residue;

$R^1$ and $R^4$ are each independently hydrogen, optionally substituted alkyl, optionally substituted aralkyl or optionally substituted aryl, and

R is optionally substituted alkyl, optionally substituted aralkyl or optionally substituted aryl, provided that when A is in class (f) or class (g) then $R^1$ and $R^4$ are not both hydrogen.

2. Dyestuffs as claimed in claim 1 in which A is selected from class (a) or (b).

3. Dyestuffs as claimed in claim 1 in which A is selected from class (a) when X is Br, F, I, $CF_3$, $NO_2$, CN, $C_{1-4}$ alkoxy carbonyl, $C_{1-4}$ alkylsulphonyl, phenyloxysulphonyl in which the phenyl is substituted by 0—3 substituents each selected from halogen, $C_{1-4}$ alkyl or $C_{1-4}$ alkoxy; $H_2NSO_2$, $C_{1-4}$ alkylamino sulphonyl, di($C_{1-4}$ alkyl)aminosulphonyl, $C_{1-4}$ alkoxy, $C_{1-4}$ acyl, $C_{1-4}$ acylamino or phenylazo in which the phenyl radical may be substituted with Cl or any of the atoms or groups as previously mentioned in this claim; or from class (b) when $X^1$ is Cl, Br, F, I, $NO_2$, CN, $CF_3$, $C_{1-4}$ alkoxycarbonyl, $C_{1-4}$ alkyl sulphonyl, $H_2NSO_2$, $C_{1-4}$ alkylaminosulphonyl, di($C_{1-4}$ alkyl) aminosulphonyl or phenylazo as defined previously in this claim; Y is Cl or any group as defined for X previously in this claim and n is 1 or 2; or from class (c) wherein $X^1$ has the meaning given previously in this claim, each $Y^1$ is independently H or has the meaning given previously for Y in this claim and $X^2$ is H, $C_{1-4}$ alkyl or $C_{1-4}$ acylamino.

4. A dyestuff as claimed in any one of claims 1 to 3 in which R is benzyl, β-phenylethyl or $C_{1-4}$ alkyl with 0—2 substituents each selected from halogen, hydroxy, cyano, $C_{1-4}$ alkoxy or $C_{1-4}$ alkoxycarbonyl.

5. A dyestuff as claimed in any one of claims 1 to 4 in which $R^1$ and $R^4$ are each independently H or $C_{1-4}$ alkyl groups with substituents as defined in claim 4.

6. Dyestuffs as claimed in claim 1 of the general formula (III):

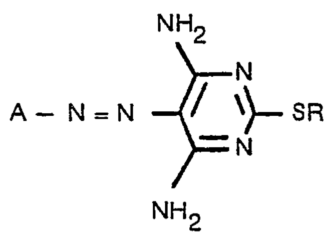 (III)

wherein A has the meanings given in claims 2 or 3 and R is a $C_{1-4}$ alkyl group with substituents as defined in claim 4.

7. A process for the manufacture of dyestuffs as claimed in claim 1 which comprises diazotising an amine of the formula (IV):

$$A—NH_2 \quad (IV)$$

and coupling the diazonium compound so obtained with a coupling component of formula (V):

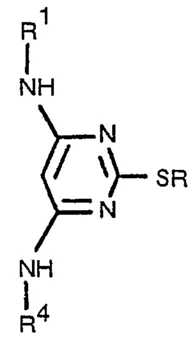

(V)

wherein A, R, $R^1$ and $R^4$ have the previously defined meanings.

8. A process for colouring aromatic polyester textile materials which comprises applying thereto a dyestuff as claimed in claim 1 in conjunction with a heat treatment to effect fixation of the dyestuff on the textile material.

**Patentansprüche**

1. Farbstoffe der allgemeinen Formel (I)

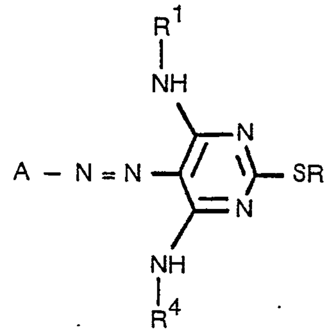

(I)

worin A für den Rest einer Diazokomponente steht, die aus einer der folgenden Klassen ausgewählt ist:

(a) 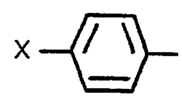

worin X für Br, F, J, $CF_3$, $NO_2$, CN, SCN, Carbonsäureester, Carbonsäureamid, Alkylsulfonyl, Arylsulfonyl, Alkylthio, Arylthio, Sulfonsäureester, Sulfonsäureamid, Alkoxy, Aryloxy, gegebenenfalls substituiertes Phenylazo, Acyl, Acylamino oder Hydroxy steht;

(b) 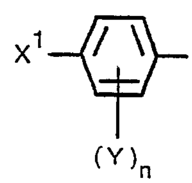

worin $X^1$ für einen elektronenabziehenden Substituenten steht, Y für einen Substituenten steht, der nicht wasserlöslich macht, und n für 1 bis 4 steht;

(c) 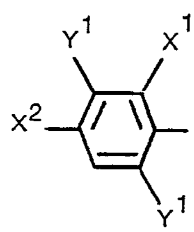

worin $X^1$ die bei (b) angegebene Bedeutung hat, jedes $Y^1$ unabhängig für H oder Y steht, wobei Y die bei (b) angegebene Bedeutung hat, und $X^2$ für H, Hydrocarbyl oder Acylamino steht;

(d) 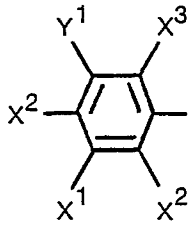

worin $X^1$, $X^2$ und $Y^1$ die oben angegebenen Bedeutungen haben und $X^3$ für X oder $X^2$ steht;

(e) 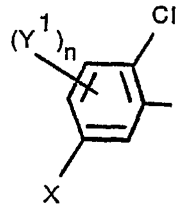

worin X und $Y^1$ die oben angegebenen Bedeutungen haben;

(f) 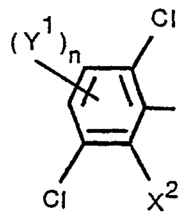

worin $X^2$ und $Y^1$ die oben angegebenen Bedeutungen haben und n für 1 oder 2 steht;

(g) 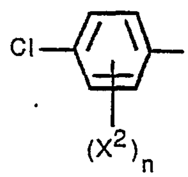

worin $X^2$ die oben angegebene Bedeutung hat und n für 1 bis 3 steht; und

(h) heterocyclische Reste; worin

$R^1$ und $R^4$ jeweils unabhängig für Wasserstoff, gegebenenfalls substituiertes Alkyl, gegebenenfalls substituiertes Aralkyl oder gegebenenfalls substituiertes Aryl stehen; und worin

R für gegebenenfalls substituiertes Alkyl, gegebenenfalls substituiertes Aralkyl oder gegebenenfalls substituiertes Aryl steht; mit der Maßgabe, daß $R^1$ und $R^4$ nicht beide Wasserstoff sind, wenn A aus den Klassen (f) und (g) ausgewählt ist.

2. Farbstoffe nach Anspruch 1, worin A aus den Klassen (a) und (b) ausgewählt ist.

3. Farbstoffe nach Anspruch 1, worin A ausgewählt ist aus der Klasse (a), wobei X für Br, F, J, $CF_3$, $NO_2$, CN, $C_{1-4}$-Alkoxycarbonyl, $C_{1-4}$-Alkylsulfonyl, Phenyloxysulfonyl, bei dem das Phenyl durch 0 bis 3 jeweils aus Halogen, $C_{1-4}$-Alkyl oder $C_{1-4}$-Alkoxy ausgewählt Substituenten substituiert ist, $H_2NSO_2$, $C_{1-4}$-Alkylaminosulfonyl, Di($C_{1-4}$-alkyl)aminosulfonyl, $C_{1-4}$-Alkoxy, $C_{1-4}$-Acyl, $C_{1-4}$-Acylamino oder Phenylazo, bei welchem das Phenylradikal durch Cl oder durch irgendwelche der weiter oben in diesem Anspruch genannten Atome oder Gruppen substituiert sein kann, steht; oder aus der Klasse (b), wobei $X^1$ für Cl, Br, F, J, $NO_2$, CN, $CF_3$, $C_{1-4}$-Alkoxycarbonyl, $C_{1-4}$-Alkylsulfonyl, $H_2NSO_2$, $C_{1-4}$-Alkylaminosulfonyl, Di($C_{1-4}$-alkyl)aminosulfonyl oder Phenylazo, wie es weiter oben in diesem Anspruch definiert ist, steht; Y für Cl oder irgendeine der weiter oben in diesem Anspruch für X definierten Gruppen steht; und n für 1 oder 2 steht; oder aus der Klasse (c), wobei $X^1$ die weiter oben in diesem Anspruch angegebene Bedeutung besitzt, $Y^1$ jeweils unabhängig für H steht oder die weiter oben in diesem Anspruch für Y angegebene Bedeutung besitzt und $X^2$ für H, $C_{1-4}$-Alkyl oder $C_{1-4}$-Acylamino steht.

4. Farbstoffe nach einem der Ansprüche 1 bis 3, worin R für Benzyl, β-Phenylethyl oder $C_{1-4}$-Alkyl mit 0 bis 2 jeweils aus Halogen, Hydroxy, Cyano, $C_{1-4}$-Alkoxy oder $C_{1-4}$-Alkoxycarbonyl ausgewählten Substituenten steht.

5. Farbstoffe nach einem der Ansprüche 1 bis 4, worin $R^1$ und $R^4$ jeweils unabhängig voneinander für H oder $C_{1-4}$-Alkylgruppen mit den in Anspruch 4 definierten Substituenten steht.

6. Farbstoffe nach Anspruch 1 der allgemeinen Formel (III)

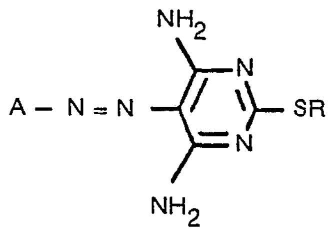

(III)

worin A die in einem der Ansprüche 2 oder 3 angegebenen Bedeutungen besitzt und R für eine $C_{1-4}$-Alkylgruppe mit den in Anspruch 4 definierten Substituenten steht.

7. Verfahren zur Herstellung von Farbstoffen nach Anspruch 1, bei welchem ein Amin der Formel (IV)

$$A—NH_2 \qquad (IV)$$

diazotiert und die so erhaltene Diazoniumverbindung mit einer Kupplungskomponente der Formel (V)

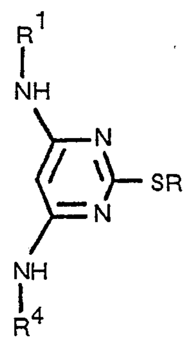

(V)

gekuppelt wird, wobei A, R, $R^1$ und $R^4$ die oben angegebenen Bedeutungen besitzen.

8. Verfahren zum Färben eines Textilmaterials aus einem aromatischen Polyester, bei welchem auf dieses ein Farbstoff nach Anspruch 1 aufgebracht und eine Wärmebehandlung durchgeführt wird, um den Farbstoff aus dem Textilmaterial zu fixieren.

**Revendications**

1. Colorants de la formule générale (I):

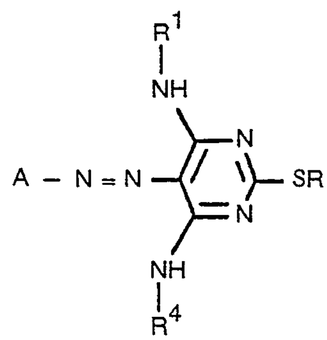

(I)

où A représente le reste d'un constituant diazoïque choisi dans l'une des classes suivantes:

(a) 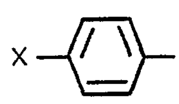

où X représente un radical Br, F, I, $CF_3$, $NO_2$, CN, SCN, ester d'acide carboxylique, amide d'acide carboxylique, alcoylsulfonyle, arylsulfonyle, alcoylthio, arylthio, ester d'acide sulfonique, amide d'acide sulfonique, alcoxy, aryloxy, phénylazo éventuellement substitué, acyle, acylamino ou hydroxyle;

(b) 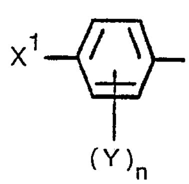

où $X^1$ représente un radical attirant les électrons, Y représente un radical ne conférant pas la solubilité dans l'eau et n représente 1 à 4;

(c) 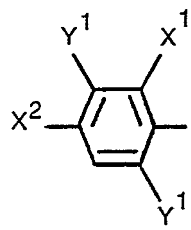

où $X^1$ a la signification indiquée en (b), chaque $Y^1$ représente indépendamment H ou Y, où Y a la signification indiquée en (b) et $X^2$ représente H ou un radical hydrocarbyle ou acylamino;

(d) 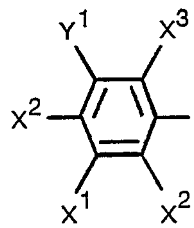

où $X^1$, $X^2$ et $Y^1$ ont les significations indiquées ci-dessus et $X^3$ représente X ou $X^2$;

(e) 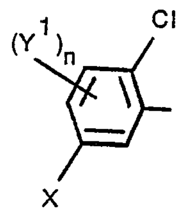

ou X et $Y^1$ ont les significations indiquées ci-dessus;

(f) 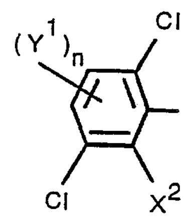

où $X^2$ et $Y^1$ ont les significations indiquées ci-dessus et n représente 1 ou 2;

(g) 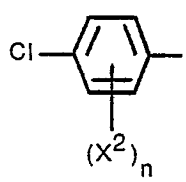

où $X^2$ a la signification indiquée ci-dessus et n représente 1 à 3, et

(h) un reste hétérocyclique;

$R^1$ et $R^4$ représentent chacun indépendamment un atome d'hydrogène ou radical alcoyle éventuellement substitué, aralcoyle éventuellement substitué ou aryle éventuellement substitué, et

R représente un radical alcoyle éventuellement substitué, aralcoyle éventuellement substitué ou aryle éventuellement substitué, avec la restriction que lorsque A appartient à la classe (f) ou à la classe (g), $R^1$ et $R^4$ ne représentant pas tous deux des atomes d'hydrogène.

2. Colorants suivant la revendication 1, dans la formule desquels A est choisi dans la classe (a) ou (b).

3. Colorants suivant la revendication 1, dans la formule desquels A est choisi dans la classe (a), auquel cas X représente Br, F, I, $CF_3$, $NO_2$, CN, $C_{1-4}$-alcoxycarbonyle, $C_{1-4}$-alcoylsulfonyle, phényloxysulfonyle dont le radical phényle porte 0 à 3 substituants choisis chacun entre les radicaux halogéno, $C_{1-4}$-alcoyle et $C_{1-4}$-alcoxy; $H_2NSO_2$, $C_{1-4}$-alcoylaminosulfonyle, di-($C_{1-4}$-alcoyl)-aminosulfonyle, $C_{1-4}$-alcoxy, $C_{1-4}$-acyle, $C_{1-4}$-acylamino ou phénylazo dont le radical phényle peut être substitué par Cl par l'un quelconque des atomes ou radicaux tels que mentionnés ci-dessus dans la présente revendication, ou dans la classe (b), auquel cas $X^1$ représente Cl, Br, F, I, $NO_2$, CN, $CF_3$, $C_{1-4}$-alcoxycarbonyle, $C_{1-4}$-alcoylsulfonyle, $H_2NSO_2$, $C_{1-4}$-alcoylaminosulfonyle, di($C_{1-4}$-alcoyl)aminosulfonyle ou phénylazo tel que défini ci-dessus dans la présente revendication; Y représente Cl ou un radical quelconque tel que défini à propos de X ci-dessus dans la présente revendication et n représente 1 ou 2; ou dans la classe (c), auquel cas $X^1$ a la signification donnée ci-dessus dans la présente revendication, chaque $Y^1$ représente indépendamment H ou a la

signification donnée ci-dessus pour Y dans la présente revendication et $X^2$ représente H ou un radical $C_{1-4}$-alcoyle ou $C_{1-4}$-acylamino.

4. Colorant suivant l'une quelconque des revendications 1 à 3, dans la formule duquel R représente un radical benzyle, β-phényléthyle ou $C_{1-4}$-alcoyle portant 0 à 2 substituants choisis parmi les radicaux halogéno, hydroxyle, cyano, $C_{1-4}$-alcoxy ou $C_{1-4}$-alcoxycarbonyle.

5. Colorant suivant l'une quelconque des revendications 1 à 4, dans la formule duquel $R^1$ et $R^4$ représentent chacun indépendamment H ou un radical $C_{1-4}$-alcoyle portant des substituants tels que définis dans la revendication 4.

6. Colorants suivant la revendication 1 de la formule générale (III):

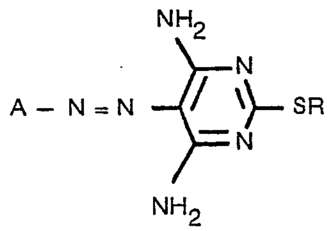

(III)

où A a les significations données dans les revendications 2 ou 3 et R représente un radical $C_{1-4}$-alcoyle portant des substituants tels que définis dans la revendication 4.

7. Procédé de préparation de colorants suivant la revendication 1, qui comprend la diazotation d'une amine de la formule (IV):

$$A—NH_2 \qquad (IV)$$

et la copulation du composé de diazonium résultant avec un constituant de copulation de formule (V):

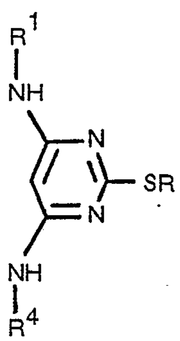

(V)

où A, R, $R^1$ et $R^4$ ont les significations définies ci-dessus.

8. Procédé de coloration de matières textiles de polyester aromatique, qui comprend l'application sur celles-ci d'un colorant suivant la revendication 1, conjointement avec un traitement thermique pour assurer la fixation du colorant sur la matière textile.